# EUROPEAN PATENT SPECIFICATION

(11) **EP 2 200 731 B1**
(45) Date of publication and mention of the grant of the patent: **16.04.2014**
(21) Application number: 08829960.7
(22) Date of filing: 15.09.2008
(51) Int. Cl.: B01D 53/14

(54) **IMPROVED METHOD FOR REGENERATION OF ABSORBENT**
VERBESSERTES VERFAHREN ZUR REGENERATION VON ABSORPTIONSMITTEL
MÉTHODE AMÉLIORÉE DE RÉGÉNÉRATION D'UN ABSORBANT

(30) Priority: 14.09.2007 NO 20074712
(43) Date of publication of application: 30.06.2010
(73) Proprietor: Aker Engineering & Technology AS, 1326 Lysaker (NO)
(72) Inventor: WOODHOUSE, Simon, N-NO-2010 Strømmen (NO); RUSHFELDT, Pål, N-NO-0678 Oslo (NO); SANDEN, Knut, N-1394 Nesbru (NO); HAALAND, Anne-Helene, N-1450 Nesoddtangen (NO)
(74) Representative: Balle, Morten
(86) International application number: PCT/NO2008/000328
(87) International publication number: WO 2009/035340

(56) References cited:
- WO-A-2008/107550
- US-A- 4 035 166
- US-A- 4 073 863
- US-A- 4 160 810
- US-A- 4 384 875
- US-A- 5 085 675

## Description

### Technical field

The present invention relates to the field of CO₂ capture from a gas mixture. More specifically the present invention relates to CO₂ capture from a CO₂ containing gas, such as combustion gas from combustion of carbonaceous material or from other CO₂ liberating processes. Most specifically the present invention relates to an improved method and plant for regeneration of a CO₂ absorbent in a method and plant for capturing of CO₂.

### Background

The continually increasing combustion of fossil fuel, such as coal, natural gas and oil, during the last centuries has resulted in an increase in the concentration of CO₂ in the atmosphere. The increasing concentration of CO₂ has caused concern due to the greenhouse effect caused by CO₂. The greenhouse effect is suspected already to have caused at least some of the changes in the climate that have been seen during the last decades, and is according to simulation models suspected to cause even more and potentially dramatic changes in the climate of planet earth.

This has caused a call for action from scientists, environmentalists and politicians throughout the world, to stabilize or even reduce the discharge of CO₂ from combustion of fossil fuel to the atmosphere. This may be achieved by capturing and safe depositing of CO₂ from the exhaust gas from thermal power plants and other plants where fossil fuel is combusted.

The captured CO₂ may be injected in sub terrain formations such as aquifers, oil wells for enhanced oil recovery or in depleted oil and gas wells for deposition. Tests indicate that CO₂ remains in the sub terrain formation for thousands of years and is not released into the atmosphere.

Capturing of CO₂ from a gas by means of absorption is well known and has been used for decades, e.g. for removal of CO₂ (and other acid gases) from produced natural gas at gas fields. The absorbents used or suggested in the prior art have been different aqueous alkaline solutions, such as potassium carbonate, see e.g. US 3.823.222, and different amines, see e.g. US 4.112.051, US 4.397.660 and US 5.061.465. Separation of CO₂ from exhaust gas from thermal power plants by means of an amine solution, is known e.g. from US 4.942.734.

Common for these CO₂ capturing solution is that the gas mixture to be separated is introduced countercurrent to the aqueous adsorbent in an absorber column. The gas leaving the absorber column is CO₂ depleted (or acid gas depleted), whereas the CO₂ (or other acid gas) leaves the absorber column together with the absorbent. The absorbent is regenerated in the regenerator column and returned to the absorber column. Amine is regenerated by stripping the amine solution with steam in the regeneration column. The steam is generated in the reboiler at the base of the column.

As illustrated above CO₂ as such is well known in the art. However, there is a need for several improvements in the CO₂ capturing process to make CO₂ free or low CO₂ emission thermal power plants economically profitable.

The plants for capturing of CO₂ are relatively large, complex and expensive constructions. It is therefore desired to reduce the size, complexity and cost of the plants.

Capturing of CO₂ is carried out at the expense of the efficiency of a thermoelectric power plant utilizing fossil fuel, so that the output of electrical power and/or medium temperature heat from a thermoelectric power plant is reduced. The reduced efficiency compared with a traditional plant makes these facilities less profitable. Improvements in the efficiency, i.e. reducing the energy cost in the CO₂ capturing process, are therefore sought.

The currently preferred absorbents are aqueous solutions of different amines. The commonly used amines are alkanol amines, such as e.g., diethanol amine, mono methyl ethanolamine, aminoethyl ethanolamine, 2-(Metylamino)etanol, MDEA as well as other amines known by skilled man in the art. The absorption of CO₂ to the amine absorbents is a reversible, exothermic reaction. Accordingly, heat has to be supplied to the regenerator column to reverse the absorption and release the CO₂.

The heat supplied to the regenerator column according to the state of the art, is supplied in reboiler where the absorbent is heated to a temperature typically from about 120 to 130 °C. The absorbent in the reboiler may be heated by an electrical heat source but most commonly by a heat medium, such as e.g. medium temperature steam. The reboiler is the main consumer of medium temperature heat energy in the absorption / desorption cycle for CO₂ capturing. A reduction in the demand for medium temperature heat energy would improve the economy of the CO₂ capturing process.

According to EP 1 736 231, the residual heat energy in the condensate generated in the reboiler is used in a heat exchanger to heat the rich absorbent before it is introduced into the regenerator column to optimize the utilization of the heat. The temperature difference between the rich absorbent and the condensate introduced into heat exchanger is, however, low, resulting in a low effect of the heat exchanger. The fact that the rich absorbent is heat exchanged against lean absorbent from the regenerator column, before said heat exchanger using condensate from the reboiler, results in lowering the temperature difference and thus the effect of this heat exchanger.

Both US 4 160 810 and US 4 383 875 describe processes for removal of acid gas from hot gas mixtures, where the lean absorbent leaving the regenerator column is flashed over a flash valve and separated in a flash tank into a gaseous phase, that is compressed and re-introduced into the regeneration column, and a liquid phase that is returned into the absorption column. The flashing of the lean absorbent lowers the temperature of the liquid absorbent and reduces the need for additional cooling thereof. Additionally, the introduction of the compressed, and thus heated gas phase from the flash tank into the regeneration column, reduces the reboiler duty.

An objective for the present invention is to improve the energy efficiency of the CO₂ capturing, primarily by obtaining a reduction in the reboiler duty, and thus a reduction in the demand for medium temperature energy, such as medium temperature steam.

### Summary of the invention

According to a first aspect the present invention relates to a method for regeneration of a rich absorbent having absorbed CO₂, to give a regenerated, or lean absorbent, and CO₂, in which method a stream of rich absorbent is introduced into a regeneration column (8) in which the absorbent flows downwards and countercurrent with steam at least partly generated by heating lean absorbent in a reboiler at the base of the regeneration column, where released CO₂ and steam are withdrawn from the top of the column and separated to give a stream for CO₂ that is removed, and condensed water that is recycled into the regeneration column, where lean, or re-generated absorbent is withdrawn from the base of the column, where the lean absorbent is flashed over a flash valve and separated in a flash tank into a gas phase, that is compressed and returned into the regenerator column, and a liquid phase mainly comprising lean absorbent that is cooled by heat exchanging against incoming rich absorbent, wherein the gas phase is heat exchanged against a condensate from the reboiler (11) after leaving the flash valve and before the gas is compressed and/or lean absorbent is heat exchanged against the condensate from the reboiler after leaving the flash valve and before the lean absorbent is heat exchanged against the rich absorbent.. The flashing of the regenerated absorbent results in the generation of a two phase stream, a liquid phase mainly comprising lean absorbent, and a gas phase mainly comprising steam and CO₂. The gas phase is advantageously returned into the regenerator column to increase the amount of steam at a low energy cost, saving energy compared to the generation of the same amount of steam in the reboiler. Additionally, the temperature of the regenerated absorbent is reduced by the stripping, making it possible to heat exchange the regenerated lean absorbent and the gas generated by flashing against low temperature heat sources to make the process more energy efficient than the solutions according to the prior art.

According to a second aspect, the present invention relates to a method for capturing CO₂ from a CO₂ containing gas, such as exhaust gas from combustion of fossil fuel, where the CO₂ containing gas is introduced into an absorber column in which the gas flows countercurrent to a liquid absorbent to give a rich absorbent having absorbed CO₂ and a low CO₂ gas stream that is released into the atmosphere, which method includes the above described method for regenerating the absorbent.

### Short description of the figures

Figure 1 is a schematic diagram of a CO₂ capturing plant according the prior art,
Figure 2 is a schematic diagram of a first embodiment of the present improved amine regeneration part of a CO₂ capturing plant,
Figure 3 is a schematic diagram of a second embodiment of the present improved amine regeneration part of a CO₂ capturing plant,
Figure 4 is a schematic diagram of a third embodiment of the present improved amine regeneration part of a CO₂ capturing plant, and
Figure 5 is a schematic diagram of a forth embodiment of the present improved amine regeneration part of a CO₂ capturing plant.

### Detailed description of the invention

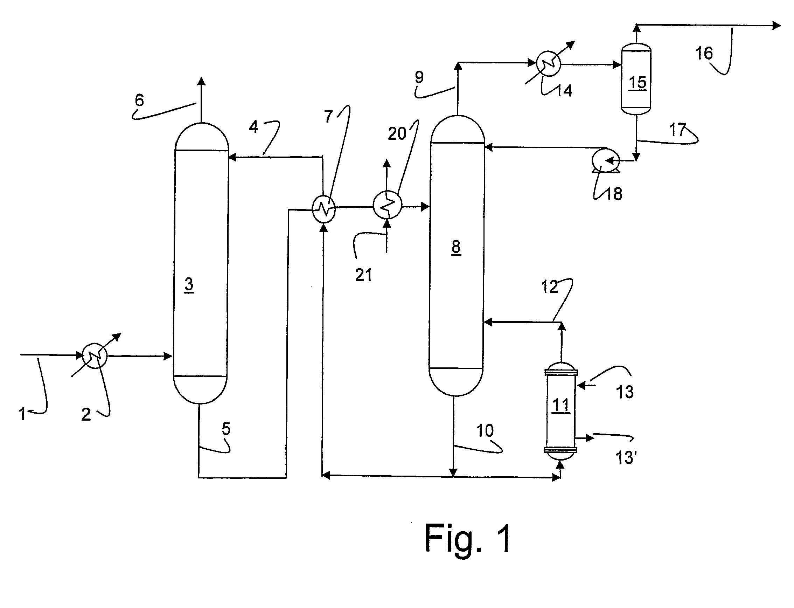

Figure 1 illustrates a CO₂ capturing plant according to EP 1 736 231 as an example of the prior art. Exhaust gas from combustion of carbonaceous fuel enters the CO₂ capturing plant through an exhaust line 1. The exhaust gas in line 1 is substantially cooled by utilization of the high temperature heat energy from the combustion for production of electrical energy. The temperature of the exhaust entering the CO₂ capturing plant through line is normally from about 120 °C to about 90 °C. The exhaust gas from line 1 is optionally introduced into a not shown cooling section in which it is saturated with water and cooled to a temperature e.g. from about 35 °C to about 60 °C.

The cooled and humidified exhaust gas is then introduced into the lower part of an absorption tower 3 in which the exhaust gas flows from the bottom to the top of the absorption tower 3 countercurrent to a lean absorbent, i.e. absorbent that is stripped for CO₂, that is introduced into the upper part of the absorption tower through a lean absorbent line 4. Lean gas, i.e. exhaust gas where a substantial part of the CO₂ is removed, is removed through a gas exit line 6 at the top of the absorption tower, whereas rich absorbent, i.e. absorbent having absorbed CO₂, is removed from the absorption tower through a rich absorbent line 5.

The rich absorbent is heated against lean absorbent that is returned to the absorption tower in a heat exchanger 7 to a temperature typically in the range between 90 and 110 °C, depending on the temperature of the lean absorbent in line 4, before the rich absorbent is introduced into a regeneration column 8. An optional heat exchanger 20 may be arranged in line 5 between the heat exchanger 7 and the regeneration column for additional heating of the rich absorbent before it is added to the regeneration column. The heat medium entering the heat exchanger 20 through a line 21, may be condensate from the steam used for heating of the reboiler, as described in EP 1 736 231, or from any other source of low temperature heat energy.

In the regeneration column 8 the rich adsorbent flows downwards, countercurrent to steam generated by heating some of the absorbent in a regeneration reboiler 11. Lean absorbent leaves the regenerator column through a lean absorbent outlet 10. A part of the lean absorbent in the outlet 10 is introduced into the regeneration reboiler 11 where it is heated to a temperature typically in the range between 120 and 130 °C, to produce hot absorbent and steam which is re-introduced into the regenerator column through a line 12. The lean absorbent in the reboiler 11 is typically heated by means of electricity, or a heating medium, such as e.g. steam. When using a heating medium for heating the absorbent in the regeneration reboiler is introduced through a line 13 and removed through a line 13'. Steam as a heat medium for the reboiler is normally introduced as a high pressure steam at a temperature of 130 °C to about 140 °C, and leaves through line 13' as condensed steam at the same temperature. In other words, the energy transferred from the heat medium to the absorbent in the reboiler is the heat of condensation of the steam.

The heating of the column from the bottom gives a temperature gradient at steady state from the bottom to the top of the column, where the temperature at the top is from 10 to 50 °C lower than at the bottom, depending on the actual design of the column. In a typical regeneration column the temperature at the bottom of the column is about 120 °C and the temperature at the top of the column is about from 10 to 50 °C lower than at the bottom of the column.

The lean absorbent in line 10 that is not introduced into the regeneration reboiler, is recycled back to the absorption column 3 through the line 4 and cooled in the heat exchanger 7 against rich absorbent in the line 5. In the heat exchanger 7 the relatively cold rich absorbent is heated against the relatively hot lean absorbent leaving the heat exchanger at a temperature of about 120 °C. Depending on the actual dimensioning and construction of the plant, the temperature of the rich amine leaving the heat exchanger 7 for the amine stripper may be from about 90 to about 110 °C. This introduction of heated rich amine reduces the temperature drop from the bottom to the top of the column and improves the efficiency thereof.

To further increase the temperature of the rich absorbent before entering the regenerator, the rich absorbent is heated in a heat exchanger 20 against condensate from the regeneration reboiler that is introduced through a line 21. The use of the condensate from the reboiler to heat the absorbent reduces the need for higher temperature energy in the system and reduces the energy loss in the process. The temperature difference between the rich amine leaving the heat exchanger 7 and the temperature of the condensate is small, resulting in minimal heating of the rich amine.

CO₂ released from the adsorbent and water vapor is withdrawn from the regenerator column 8 through a gas withdrawal line 9. The gas in the gas withdrawal line 9 is cooled in a reflux condenser 14 to condense water that is separated from the remaining gas, mainly comprising CO₂ in a CO₂ separator 15. CO₂ gas and some remaining water vapor is removed from the CO₂ separator 15 through a CO₂ line 16 for further treatment, such as drying, compression and deposition. The condensed water in the CO₂ separator is withdrawn through a line 17 and pumped back to the top of the regeneration column 8 by means of a pump 18.

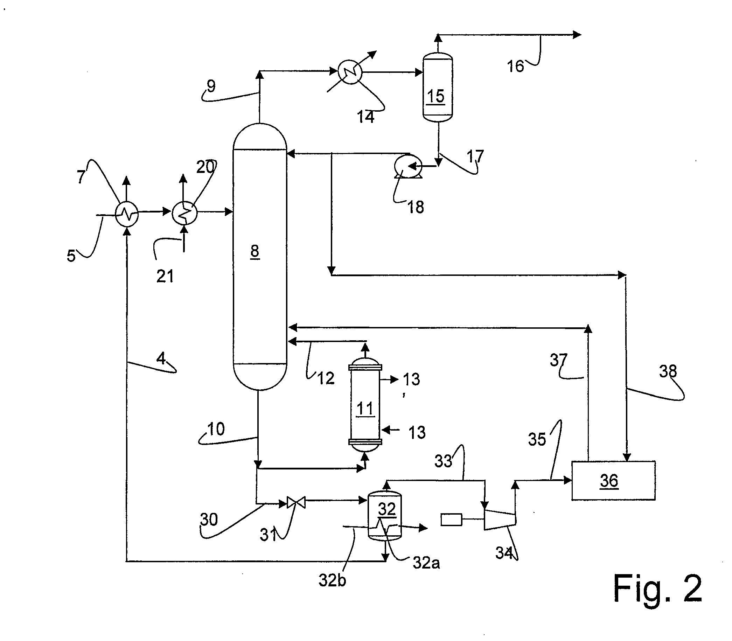

Figures 2 illustrates a first embodiment an inventive regeneration plant. The stream of lean absorbent withdrawn from the regenerator 8 is split in two streams as described above. The part that is to be returned to the absorber, is flashed over a flash valve 31 and flash vessel 32 to give steam that is withdrawn from the flash vessel 32 in a steam line 33, and lean absorbent that is returned to the absorber 3 via line 4.

The gas withdrawn through line 33 is compressed in a compressor 34 to give a heated gas. The compressed and heated gas is withdrawn through a line 35 and is optionally cooled by mixing with water from a line 38in a de-superheater 36. The optionally heated and humidified gas is then introduced into the regenerator through line 37, as a heat source. The water in line 38 is preferably condensate from elsewhere in the plant, such as water withdrawn from line 17. Recycling of condensed water from the process is preferred as it maintains the water balance of the system.

The temperature of the compressed gas in line 35 is usually substantially higher than the temperature (such as > 180°) in the regenerator. The temperature of the gas is reduced in the de-superheater to a temperature closer to the temperature of the regenerator, such as 110 to 14 °C, to avoid degeneration of the absorbent by local superheating, and negatively affect the temperature profile of the regenerator.

Flashing of the lean absorbent results in a temperature drop of the lean absorbent and the gas released from the absorbent, thereby increasing the capacity of the lean absorbent to utilize low temperature heat energy to be able to increase the recirculation of heat energy into the regenerator and thus reduce the reboiler duty. Low temperature heat energy is abundant in such a plant, i.a. as condensate from the line 13' as discussed above, or from any other source for low temperature heat energy.

To maximize the utilization of the low temperature heat energy, the low temperature heat energy is used to heat all or parts of the stream of lean absorbent after flashing. Figures 2, 3, 4, 5 and 6 illustrate different possibilities for a heater using low temperature heat energy as heat source.

In figure 2 a heating coil 32a receiving a low temperature heat medium through a line 32b, is provided in the flash tank 32. According to this embodiment, both steam and liquid in the flash tank 32 may be heated.

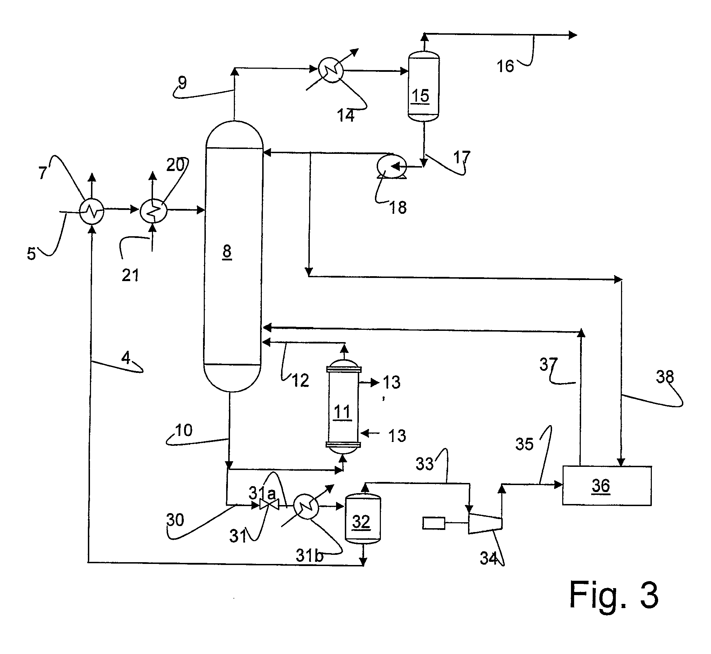

In figure 3, a heat exchanger 31 b is arranged on line 31 a connecting the flash valve 31 and the flash tank 32, heating both the liquid phase and the gas phase.

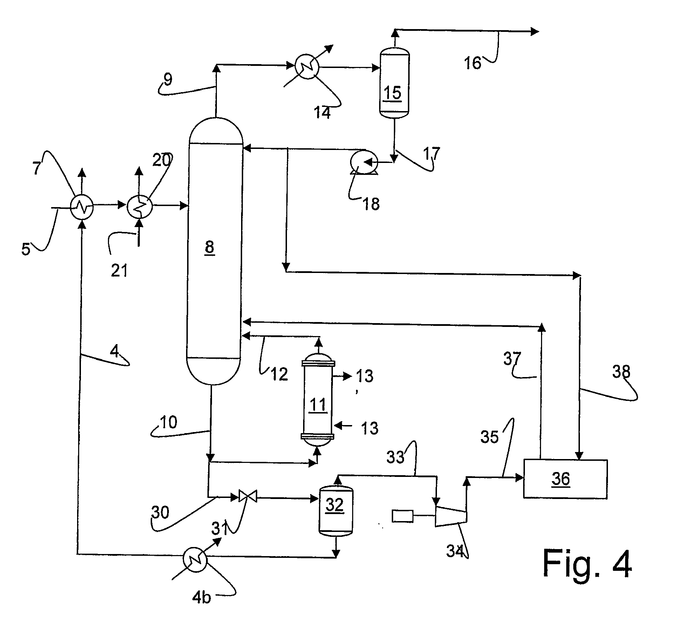

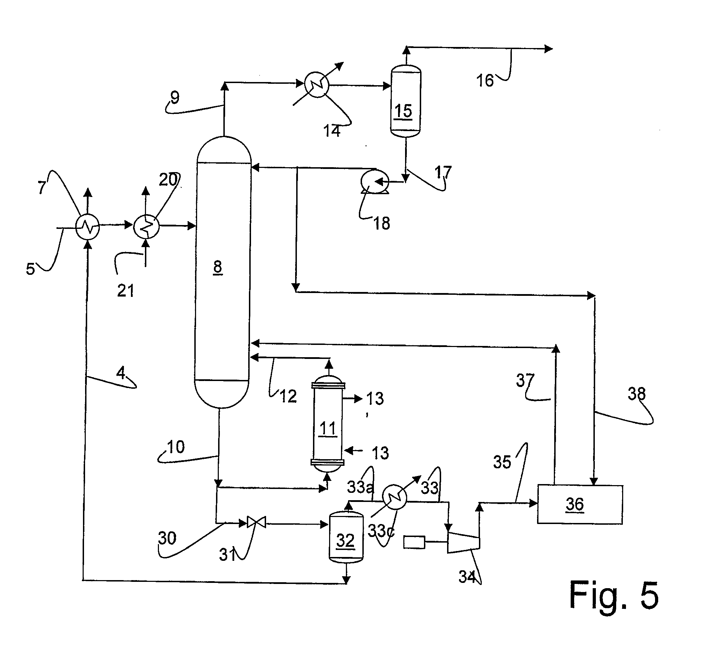

In figure 4, a heat exchanger 4b is arranged in line 4, for heating of the liquid absorbent. In figure 5, a heat exchanger 33c is arranged on line 33 to heat the gas that is withdrawn from the flash tank 32.

The actual localization of the heat exchanger or heater may depend on the actual layout of the plant and especially the regenerator 8, and how the temperature profile through the length of the regenerator is.

A heat exchanger arranged between the flash valve and the flash tank, or a heat coil in the flash tank, may be used if it is preferred to transfer heat from the selected low temperature heat source both to the gas withdrawn through line 33, and the liquid withdrawn through line 4.

Heating the gas phase will increase the capacity for the compressed gas to be mixed with water in the de-superheater, to increase the amount of steam introduced through line 37 into the regenerator as a supplement to the steam produced in the reboiler 11.

Heating the liquid phase will increase the temperature of the lean absorbent in line 4, and allow transfer of this additional heat to the rich absorbent in the heat exchanger 7, to increase the temperature thereof when entering the regenerator.

The rich absorbent may also be heated by means of an optional heat exchanger 20 provided between the heat exchanger 7 and the regenerator 8, to heat the rich absorbent before the entry to the regenerator 8. A low temperature heat energy heat medium enters the heat exchanger 20 through a line 21. The heat medium in line 21 may be condensate from the reboiler as explained above, or from any other low temperature energy source that is available in the plant.

The gas generated in the flash vessel 32 mainly comprises steam and carbon dioxide, to remove more carbon dioxide from the absorbent before it is returned to the absorber.

The steam and CO₂ that is withdrawn through line 33 is compressed in a compressor 34 to give a compressed, hot, unsaturated vapour in line 35. The steam in line 35 is then cooled and saturated by water in a de-superheater 36 in which water is introduced through a line 38 and mixed with the steam from line 35. The resulting water saturated steam from the de-superheater 36 is then returned and injected into to the stripper 8 through a line 37. The water introduced into the de-superheater may conveniently be a part of the water that is condensed in the separator 15. In the illustrated embodiment, the water in line 38 is withdrawn from line 17, conveniently after the pump 18.

Flashing of the lean absorbent over flash valve 31 and removal of vapor in separator 32, reduces the temperature of the lean absorbent with from 10 to 40 °C. The rich medium leaving heat exchanger 7 will therefore have a temperature that is lower than the desired temperature for introduction into the regenerator column 8. An optional heat exchanger 20 heated by a low temperature heat medium in line 21, may therefore be provided to heat the rich absorbent to the desired temperature. The low temperature heat medium entering the heat exchanger 20 through line 21, may e.g. be the heat medium leaving the reboiler 11 in line 13'. The heat medium introduced into the reboiler in line 13 is preferably steam, whereas the heat medium leaving the reboiler in line 13' is condensed water.

Compressing the steam in line 33 increases both the temperature and the pressure of the steam, to produce hot, unsaturated vapor. The absorbent can be degraded by a temperature higher than about 130 °C. The water added in the de-superheater 36 ensures that the steam that is introduced into the regeneration column in line 37 is saturated steam having a temperature of 120 -130°C.

The term "steam" as used in the present description and claims, is, where appropriate, also intended to include steam that includes other gases, such as e.g. CO₂.

By compressing the steam in line 33 and thereby adding heat, the low temperature and low pressure steam in line 33 is converted to medium temperature steam having a utility in the plant. Additionally, low temperature heat from the reboiler may find use in the heat exchanger 20. In a plant according to the state of the art, the low temperature heat medium, such as steam condensate leaving the reboiler, is cooled against water in a heat exchanger, and returned to a boiler for generation of medium temperature steam that is returned to the reboiler.

As mentioned above, introduction of a heating coil in the flash tank heated by a low temperature heat source, such as condensate from other processes in the plant, such as from line 13', as illustrated in figure 2, will result in heating of both the gas phase and the liquid phase, and thus the temperature in both lines 37, for introduction of steam into the regenerator, and line 4 for heating the rich amine in the gas exchanger 7. The plant illustrated in figure 2 thus reduces the heat, or energy loss, from the plant making it more energy efficient. Substituting the heat coil 32a with a heater 31 a, arranged between the flash valve and the flash tank as illustrated in figure 3, will give substantially the same result. Two-phase flow through a heat exchanger may, however, result in practical process related problems that makes the heat coil in the flash tank more preferred.

Figure 4 illustrates an embodiment of the present invention, wherein low temperature heat is applied to the lean amine after flashing. The lean amine temperature after the flash valve is much lower than the temperature upstream the flash valve. The temperature difference will be in the range 10 to 40°C. It is therefore possible to use low temperature heat to heat up this stream and reduce the duty of the stripper reboiler.

The hot lean amine leaves the amine stripper 8 through line 10 and then 30. The amine is then flashed over valve 31. Stream 31 b exiting valve 31 is at a reduced temperature. The temperature reduction is dependent upon the pressure drop across the valve but will be the range 10°C to 50 °C. It is therefore possible to heat stream 31 a with a heat source at a lower temperature than that use in the reboiler 11. Stream 31 a enters heat exchanger 31 b and is heated with a low temperature heat source. This results in the generation of more vapour in the amine stream. This vapour is mainly steam but also includes some carbon dioxide. The lean amine then enters flash vessel 32 and the vapour is separated from the liquid. The vapour is fed to the base of the stripper 8 and the liquid lean amine is returned to the absorber via heat exchangers. The increased vapour rate returned to the column reduces the load on the reboiler 11.

As an example we can apply the invention to the exemplary plant according to figure 2 for capturing of CO2 from the exhaust gas of a 400 MW gas fired power station with CO2 removal by MEA.

If we have 10 MW of low temperature heat available that cannot be used in the reboiler but is of sufficient temperature that it can be used to heat the lean amine. This heat can be used in the lean amine exchanger 31 b to generate more flash vapour. Simulations indicate that this will result in a 8 MW reduction in the reboiler duty. However, it will require an increase of 1 MW to the compressor duty.

Figure 4 illustrates a variation of the principle described with reference to figure 3, wherein the lean amine is heated after the flash vessel 32. The lean amine temperature after the flash vessel is much lower than the temperature upstream the flash valve. The temperature difference will be in the range 10 to 40°C. It is therefore possible to use low temperature heat to heat up this stream and reduce the duty of the stripper reboiler.

Lean amine leave flash vessel 32 in stream 4. Stream 4 is at a reduced temperature and can therefore be heated with low temperature heat source in heat exchanger 4b. The heated lean amine exits via stream 4 and flows to the absorption column via a number of heat exchangers. The heat transferred to stream 4 will eventually be transferred to the regenerator 8 via the rich amine stream. Therefore the reboiler 11 duty will be reduced.

As an example we can apply the invention to the exemplary plant according to figure 4 for capturing of CO₂ from the exhaust gas of a 400 MW gas fired power station with CO₂ removal by MEA.

If we have 10 MW of low temperature heat available that cannot be used in the reboiler but is of sufficient temperature that it can be used to heat the lean amine. This heat can be used in the lean amine exchanger 4b to heat the lean amine. Simulations indicate that this will result in a 4 MW reduction in the reboiler duty. However, it will require no increase to the compressor duty.

Figure 5 illustrates a further variation of the principle described with reference to figure 3, wherein the vapour is heated after the flash vessel 32. The vapour temperature after the flash vessel is much lower than the temperature upstream the flash valve. The temperature difference will be in the range 10 to 40°C. It is therefore possible to use low temperature heat to heat up this stream and reduce the duty of the stripper reboiler.

Vapour leaves flash vessel 32 in stream 33a. Stream 33a is at a reduced temperature and can therefore be heated with low temperature heat source in heat exchanger 32b. The heated vapour is compressed and enters the stripper column. The heat transferred to stream 33a will be transferred to the stripper 8 in this vapour stream. Therefore the reboiler 11 duty will be reduced.

As an example we can apply the invention to the exemplary plant according to figure 5 for capturing of CO2 from the exhaust gas of a 400 MW gas fired power station with CO2 removal by MEA.

If we have 10 MW of low temperature heat available that cannot be used in the reboiler but is of sufficient temperature that it can be used to heat the lean amine. This heat can be used in the exchanger 33c to heat the vapour. Simulations indicate that this will result in 8 MW reduction in the reboiler duty. However, it will require an increase to the compressor duty of 2 MW.

## Claims

1. A method for regeneration of a rich absorbent having absorbed CO₂, to give a regenerated, or lean absorbent, and CO₂, in which method a stream of rich absorbent is introduced into a regeneration column (8) in which the absorbent flows downwards and countercurrent with steam at least partly generated by heating lean absorbent in a reboiler (11) at the base of the regeneration column(8), where released CO₂ and steam are withdrawn from the top of the column (8) and separated to give a stream for CO₂ that is removed, and condensed water that is recycled into the regeneration column (8), where lean, or re-generated absorbent is withdrawn from the base of the column (8), where the lean absorbent is flashed over a flash valve (31) and separated in a flash tank (32) into a gas phase, that is compressed and returned into the regenerator column (8), and a liquid phase mainly comprising lean absorbent that is cooled by heat exchanging against incoming rich absorbent, **characterised in that** the gas phase is heat exchanged against a condensate from the reboiler (11) after leaving the flash valve and before the gas is compressed and/or lean absorbent is heat exchanged against the condensate from the reboiler (11) after leaving the flash valve and before the lean absorbent is heat exchanged against the rich absorbent.

2. The method of claim 1, wherein the gas phase and the lean absorbent are heated in a heat exchanger (31 b) provided between the flash valve (31 a) and the flash tank (32).

3. The method of claim 1, wherein the gas phase and the lean absorbent are heated by means of a heat coil (32a) provided in the flash tank (32).

4. The method of claim 1, wherein the lean absorbent is heated in a heat exchanger (4b, 41) after leaving the flash tank (32) and before the lean absorbent is heat exchanged against the rich absorbent.

5. The method of claim 1, wherein the gas phase is heated in a heat exchanger (33c) after leaving the flash tank and before the gas is compressed.

6. A method for capturing CO₂ from a CO₂ containing gas, such as exhaust gas from combustion of fossil fuel, where the CO₂ containing gas is introduced into an absorber column in which the gas flows countercurrent to a liquid absorbent to give a rich absorbent having absorbed CO₂ and a low CO₂ gas stream that is released into the atmosphere, where the rich absorbent is regenerated according to claim 1.

7. The method of claim 6, wherein the gas phase and the lean absorbent are heated in a heat exchanger provided between the flash valve and the flash tank.

8. The method of claim 6, wherein the gas phase and the lean absorbent are heated by means of a heat coil provided in the flash tank.

9. The method of claim 6, wherein the lean absorbent is heated in a heat exchanger after leaving the flash tank and before the lean absorbent is heat exchanged against the rich absorbent.

10. The method of claim 6, wherein the gas phase is heated in a heat exchanger after leaving the flash tank and before the gas is compressed.

11. The method of any of the preceding claims, wherein the low temperature heat medium is condensate from the heating of the reboiler.

## Patentansprüche

1. Verfahren zum Regenerieren eines gesättigten Absorbens, welches CO₂ absorbiert hat, um ein regeneriertes oder mageres Absorbens und CO₂ zu ergeben, in welchem Verfahren ein Strom von gesättigtem Absorbens in eine Regeneratorsäule (8) zugeführt wird, in welcher das Absorbens abwärts und im Gegenstrom mit Dampf fließt, welcher zumindest teilweise durch Erwärmen des mageren Absorbens in einem Verdampfer (11) an der Basis der Regeneratorsäule (8) erzeugt wird, wobei freigesetztes CO₂ und Dampf am oberen Ende der Säule (8) entnommen und getrennt werden, um einen Strom von CO₂, welches entfernt wird, und Kondenswasser zu ergeben, welches in der Regeneratorsäule (8) rückgeführt wird, wobei mageres oder regeneriertes Absorbens an der Basis der Säule (8) entnommen wird, wobei das magere Absorbens über ein Entspannungsventil (31) entspannt wird und in einem Entspannungsbehälter (32) in eine Gasphase, welche verdichtet und in die Regeneratorsäule (8) rückgeführt wird, und eine Flüssigphase getrennt wird, welche hauptsächlich mageres Absorbens umfasst, welches durch Wärmeaustausch mit dem hereinkommenden gesättigten Absorbens gekühlt wird,
**dadurch gekennzeichnet, dass** ein Wärmeaustausch der Gasphase mit einem Kondensat vom Verdampfer (11) nach Verlassen des Entspannungsventils und bevor das Gas verdichtet wird stattfindet und/oder ein Wärmeaustausch des mageren Absorbens mit dem Kondensat vom Verdampfer (11) nach Verlassen des Entspannungsventils und vor Wärmeaustausch des mageren Absorbens mit dem gesättigten Absorbens stattfindet.

2. Verfahren nach Anspruch 1, wobei die Gasphase und das magere Absorbens in einem Wärmetauscher (31b) erwärmt werden, welcher zwischen dem Entspannungsventil (31a) und dem Entspannungsbehälter (32) vorgesehen ist.

3. Verfahren nach Anspruch 1, wobei die Gasphase und das magere Absorbens durch eine Heizspule (32a) erwärmt wird, welche im Entspannungsbehälter (32) vorgesehen ist.

4. Verfahren nach Anspruch 1, wobei das magere Absorbens in einem Wärmetauscher (4b, 41) nach Verlassen des Entspannungsbehälters (32) und vor Wärmeaustausch des mageren Absorbens mit dem gesättigten Absorbens erwärmt wird.

5. Verfahren nach Anspruch 1, wobei die Gasphase in einem Wärmetauscher (33c) nach Verlassen des Entspannungsbehälters und bevor die Gasphase verdichtet wird erwärmt wird.

6. Verfahren zum Auffangen von CO₂ aus einem CO₂-enthaltenden Gas, wie zum Beispiel Abgas aus der Verbrennung von fossilen Brennstoffen, wobei das CO₂-enthaltende Gas in eine Absorbersäule geführt wird, in welcher das Gas im Gegenstrom zu einem flüssigen Absorbens fließt, um ein gesättigtes Absorbens mit absorbiertem CO₂ und einen geringen CO₂-Gasstrom zu ergeben, welcher in die Atmosphäre freigegeben wird, wobei das gesättigte Absorbens nach Anspruch 1 regeneriert wird.

7. Verfahren nach Anspruch 6, wobei die Gasphase und das magere Absorbens in einem Wärmetauscher erwärmt werden, welcher zwischen dem Entspannungsventil und dem Entspannungsbehälter vorgesehen ist.

8. Verfahren nach Anspruch 6, wobei die Gasphase und das magere Absorbens durch eine Heizspule erwärmt werden, welche im Entspannungsbehälter vorgesehen ist.

9. Verfahren nach Anspruch 6, wobei das magere Absorbens in einem Wärmetauscher nach Verlassen des Entspannungsbehälters und vor Wärmeaustausch des mageren Absorbens mit dem gesättigten Absorbens erwärmt wird.

10. Verfahren nach Anspruch 6, wobei die Gasphase in einem Wärmetauscher nach Verlassen des Entspannungsbehälters und bevor die Gasphase verdichtet wird erwärmt wird.

11. Verfahren nach einem der vorhergehenden Ansprüche, wobei das Niedertemperaturheizmedium ein Kondensat vom Erwärmen des Verdampfers ist.

## Revendications

1. Procédé de régénération d'un absorbant riche contenant du CO₂ absorbé, pour produire un absorbant régénéré, ou pauvre, et du CO₂, procédé dans lequel un courant d'absorbant riche est introduit dans une colonne de régénération (8) dans laquelle l'absorbant s'écoule vers le bas et à contre-courant par rapport à de la vapeur qui est au moins partiellement générée en chauffant l'absorbant pauvre dans un rebouilleur (11) qui est situé à la base de la colonne de régénération (8), dans lequel le CO₂ libéré et la vapeur sont aspirés à partir du sommet de la colonne (8) et sont séparés afin d'obtenir un courant de CO₂ qui est éliminé, et de l'eau condensée qui est recyclée dans la colonne de régénération (8), dans lequel l'absorbant pauvre, ou régénéré, est aspiré à partir de la base de la colonne (8), où l'absorbant pauvre est décompressé sur une soupape de détente (31) et séparé dans un réservoir de décompression (32) en une phase gazeuse, qui est comprimée et renvoyée dans la colonne de régénération (8), et une phase liquide qui est principalement constituée de l'absorbant pauvre qui est refroidi par un échange de chaleur avec l'absorbant riche entrant,
**caractérisé en ce que** la phase gazeuse subit un échange de chaleur avec un condensat en provenance du rebouilleur (11) après avoir quitté la soupape de détente et avant que le gaz ait été comprimé, et/ou l'absorbant pauvre subit un échange de chaleur avec le condensat en provenance du rebouilleur (11) après avoir quitté la soupape de détente et avant que l'absorbant pauvre ait subi un échange de chaleur avec l'absorbant riche.

2. Procédé selon la revendication 1, dans lequel la phase gazeuse et l'absorbant pauvre sont chauffés dans un échangeur de chaleur (31b) qui est prévu entre la soupape de détente (31a) et le réservoir de décompression (32).

3. Procédé selon la revendication 1, dans lequel la phase gazeuse et l'absorbant pauvre sont chauffés au moyen d'une bobine de chauffage (32a) qui est prévue dans le réservoir de décompression (32).

4. Procédé selon la revendication 1, dans lequel l'absorbant pauvre est chauffé dans un échangeur de chaleur (4b, 41) après avoir quitté le réservoir de décompression (32) et avant que l'absorbant pauvre ait subi un échange de chaleur avec l'absorbant riche.

5. Procédé selon la revendication 1, dans lequel la phase gazeuse est chauffée dans un échangeur de chaleur (33c) après avoir quitté le réservoir de décompression et avant que le gaz soit comprimé.

6. Procédé pour capturer du CO₂ à partir d'un gaz contenant du CO₂, tel qu'un gaz d'échappement généré par la combustion d'un combustible fossile, dans lequel le gaz contenant du CO₂ est introduit dans une colonne d'absorption dans laquelle le gaz s'écoule à contre-courant par rapport à un absorbant liquide afin de produire un absorbant riche ayant absorbé du CO₂ et un courant de gaz à faible teneur en CO₂ qui est libéré dans l'atmosphère, dans lequel l'absorbant riche est régénéré selon la revendication 1.

7. Procédé selon la revendication 6, dans lequel la phase gazeuse et l'absorbant pauvre sont chauffés dans un échangeur de chaleur qui est prévu entre la soupape de détente et le réservoir de décompression.

8. Procédé selon la revendication 6, dans lequel la phase gazeuse et l'absorbant pauvre sont chauffés au moyen d'une bobine de chauffage qui est prévue dans le réservoir de décompression.

9. Procédé selon la revendication 6, dans lequel l'absorbant pauvre est chauffé dans un échangeur de chaleur après avoir quitté le réservoir de décompression et avant que l'absorbant pauvre ait subi un échange de chaleur avec l'absorbant riche.

10. Procédé selon la revendication 6, dans lequel la phase gazeuse est chauffée dans un échangeur de chaleur après avoir quitté le réservoir de décompression et avant que le gaz soit comprimé.

11. Procédé selon l'une quelconque des revendications précédentes, dans lequel le fluide de chauffage à basse température est un condensat généré par le chauffage du rebouilleur.
